# EUROPEAN PATENT SPECIFICATION

(11) **EP 1 783 398 B1**
(45) Date of publication and mention of the grant of the patent: **18.04.2012**
(21) Application number: 06022859.0
(22) Date of filing: 02.11.2006
(51) Int. Cl.: F16H 3/66

(54) **Automatic transmission for automotive vehicle**
Automatisches Getriebe für Kraftfahrzeug
Transmission automatique pour véhicule automobile

(30) Priority: 02.11.2005 JP 2005320060; 12.01.2006 JP 2006004753
(43) Date of publication of application: 09.05.2007
(73) Proprietor: Mazda Motor Corporation, Aki-gun, Hiroshima 730-8670 (JP)
(72) Inventor: Kamada, Shinya, Aki-gun, Hiroshima 730-8670 (JP); Teraoka, Takamichi, Aki-gun, Hiroshima 730-8670 (JP); Doi, Junichi, Aki-gun, Hiroshima 730-8670 (JP); Saka, Tokimori, Aki-gun, Hiroshima 730-8670 (JP); Iwasaki, Tatsuhiko, Aki-gun, Hiroshima 730-8670 (JP); Sakaue, Naohiro, Aki-gun, Hiroshima 730-8670 (JP); Mizobe, Tatsutoshi, Aki-gun, Hiroshima 730-8670 (JP); Fujita, Yoshihiko, Aki-gun, Hiroshima 730-8670 (JP); Iwashita, Norio, Aki-gun, Hiroshima 730-8670 (JP); Komori, Satoshi, Aki-gun, Hiroshima 730-8670 (JP); Ueda, Kazuhiko, Aki-gun, Hiroshima 730-8670 (JP); Seiji, Esaki, Aki-gun, Hiroshima 730-8670 (JP)
(74) Representative: Müller-Boré & Partner Patentanwälte

(56) References cited:
- US-A- 4 939 955
- US-A- 6 120 410
- US-A1- 2005 137 044

## Description

The present description relates to an automatic transmission for automotive vehicles, particularly relates to an arrangement of planetary gear sets and frictional elements of an automatic transmission.

There is required a shifting gear mechanism having a plurality of planetary gear sets to achieve six or more forward speed ratios. In addition to the planetary gear sets, there are required at least five frictional elements, such as brakes and clutches, to achieve six forward and one reverse speed ratios. U.S. Patent 6,884,197 presents one example of arrangements of the planetary gear sets and the frictional elements.

In the '197 patent, as shown particularly in its Figure 12, one of three planetary gear sets has a sun gear permanently fixed to a transmission case. In other words, the sun gear does not rotate at all. Its ring gear is permanently connected to an input shaft, and rotates together with this input shaft. So, this planetary gear set permanently reduces speed of the input shaft, and it will be called a permanent reduction planetary gear set. A clutch is arranged overlapped with the permanent reduction planetary gear set in the axial direction. Another clutch is arranged overlapped with another planetary gear set next to the permanent reduction planetary gear set. Then, additional clutch and brakes are arranged offset from the three planetary gear sets in the axial direction. Therefore, the arrangement of the '197 patent may cause the input shaft longer, its support structure such as a transmission casing larger, and eventually the overall size of the automatic transmission greater. This larger size may become a constraint in mounting the automatic transmission on an automotive vehicle. Especially when the automatic transmission is laterally mounted on the vehicle, the shaft length may be needed to be shorter.

US 2005/0137044 A1 discloses a multiple speed automatic transmission for motor vehicle including a speed reduction gear set driveably connected to an input shaft and a planetary gear set having elements selectively driveably connected to the speed reduction gear set.

WO 83/00200 discloses a planetary transmission with all the features of the preamble of claim 1, in which a front section having a rotating housing and a planetary gear set is operatively connected to a rear section for multiple-speed use Particularly adaptable to a truck or earthmoving vehicle.

Therefore, there is a need for an improved arrangement of planetary gear sets and frictional elements of an automatic transmission of the type presented in the prior art.

This object is solved according to the invention by the features of an automatic transmission according to claim 1. Preferred embodiments of the invention are subject of the dependent claims.

Accordingly, there is provided, in one aspect of the present description, an automatic transmission comprising a transmission case, a first shaft (at least partly) housed in and rotationally supported by said transmission case, and capable of receiving torque from an engine, a first shifting gear mechanism arranged coaxially with the first shaft, and a second shifting gear mechanism including a second planetary gear set. The second planetary gear set is (at least partly) housed within the transmission case and arranged coaxially with the first shaft, one of its sun and ring gears is capable of rotating together with the input shaft, and the other of the sun and ring gears is fixed to the transmission case. The automatic transmission further comprises first and second frictional elements arranged at least partly overlapped with the second planetary gear set in the axial direction between the planetary gear set and the transmission case in the radial direction, wherein said first shifting gear mechanism comprises three planetary gear sets, and each of said planetary gear sets is a single pinion type planetary gear set; wherein said first frictional element is a clutch, and said second frictional element is a brake arranged between said clutch and said transmission case in the radial direction.

Since one of the sun and ring gears of the second planetary gear set is capable of rotating together with said input shaft, and the other of the sun and ring gears is fixed to the transmission case, the second planetary gear set reduces speed of the first shaft. Therefore, torque will be multiplied at the second planetary gear set as a first stage of multiple stages, and torque load there will be minimal. This may result in a smaller radial size of the second planetary gear set. Then, by arranging the first and second frictional elements at least partly overlapped with the second planetary gear set, the two frictional elements may be arranged at the smaller radius outer periphery of the second planetary gear set and overlapped with each other in the axial direction. Therefore, the plurality of frictional elements may be arranged on a shorter shaft without excessively increasing the radial size of the automatic transmission.

In one embodiment, the second planetary gear set may have a sun gear fixed to the transmission case, and a ring gear connected to the first shaft. Then, the first frictional element may be a clutch, and the second frictional element may be a brake arranged between the clutch and the transmission case. Thereby, non-rotating or fixed parts, such as frictional plates of the brake may be arranged at the both ends in the radial direction so that the transmission case may be effectively used for fixing the parts.

According to the invention, said first frictional element is a clutch, and said second frictional element is a brake arranged between said clutch and said transmission case in the radial direction.

Preferably, said first and second frictional elements are connected to a single rotational element of said first shifting gear mechanism.

Further preferably, the automatic transmission further comprises a third frictional element arranged overlapped with a planetary gear set consisting of a part of said first shifting gear mechanism and is arranged next to said second planetary gear set in the axial direction.

According to the invention, the automatic transmission further comprises a torque converter capable of transmitting torque from said engine to one axial end region of said first shaft. said first shifting gear mechanism being arranged between said torque converter and said second planetary gear set in the axial direction.

According to the invention, the automatic transmission further comprises: an output gear arranged coaxially on said first shaft between said second planetary gear set and said torque converter in the axial direction; a second shaft arranged in parallel to said first shaft; a driven gear coaxially arranged on said second shaft and engaging with said output gear; and a final gear coaxially arranged on said second shaft between said torque converter and said driven gear in the axial direction, and capable of transmitting torque from said driven gear to a vehicle driving wheel.

Still further preferably, said ring gear of said second planetary gear set is connected to said first shaft at a first side of said second planetary gear set that faces to said torque converter.
Further preferably, a planetary carrier of said second planetary gear set is connected to said first frictional element at a second side of said second planetary gear set that is opposite to said torque converter.

Still further preferably, said first frictional element is connected to one of rotational elements of said first shifting gear mechanism at said first side of said second planetary gear set.

Most preferably, the automatic transmission further comprises a hydraulic piston capable of axially moving and selectively engaging said first or second frictional element, said hydraulic piston being arranged at a second side of said second planetary gear set that is opposite to said torque converter.

According to a further preferred embodiment of the invention, said sun gear of said second planetary gear set is fixed to said transmission casing.

Preferably, said ring gear of said second planetary gear set is connected to said first shaft at a first side of said second planetary gear set that faces to said torque converter.

Further preferably, said second frictional element is arranged between said first frictional element and said transmission case in the radial direction and connected to one of rotational elements of said first shifting gear mechanism at said first side of said second planetary gear set.

Still further preferably, said one of said sun and ring gears of said second planetary gear set is connected to said first shaft at a first side of said second planetary gear set that faces to said torque converter.

Further preferably, said first frictional element is connected to one of rotational elements of said first shifting gear mechanism at said first side of said second planetary gear set.

Still further preferably, the automatic transmission further comprises a hydraulic piston capable of axially moving and selectively engaging said first or second frictional element, said hydraulic piston being arranged at a second side of said second planetary gear set that is opposite to said first side.

Further preferably, said second frictional element is arranged between said first frictional element and said transmission case in the radial direction and connected to one of rotational elements of said first shifting gear mechanism at said first side of said second planetary gear set.

Still further preferably, said first frictional element is a clutch, and said second frictional element is a brake arranged between said clutch and said transmission case in the radial direction.

Further preferably, said clutch and brake are connected to a single rotational element of said first shifting gear mechanism.

Most preferably, said transmission case directly supports a one side of said brake so that it does not rotate.

According to a further aspect of the invention, there is provided an automatic transmission comprising: a transmission case; a first shaft housed in and rotationally supported by said transmission case, and capable of receiving torque from an engine; a first shifting gear mechanism arranged coaxially with said first shaft; a second shifting gear mechanism including a second planetary gear set, said second planetary gear set being housed within said transmission case and arranged coaxially with said first shaft, its ring gear being connected to said input shaft, its sun gear being fixed to said transmission case, and torque being transmitted from said first shaft through some of rotational elements of said first and second shifting gear mechanism; a frictional brake arranged at least partly overlapped with said planetary gear in the axial direction, and arranged between said planetary gear set and said transmission case in the radial direction; and a frictional clutch arranged at least partly overlapped with said planetary gear and said frictional brake in the axial direction, and arranged between said planetary gear set and said frictional brake in the radial direction.

According to a preferred embodiment of the invention, said frictional clutch is connected to a planetary carrier of said second planetary gears.

Most preferably, one of rotational elements of said first shifting gear mechanism is connected to said frictional brake and said frictional clutch.

The advantages described herein will be more fully understood by reading the following example of embodiments in which the above aspects are used to advantage with reference to the drawings. It should be understood that even though embodiments are separately described, single features thereof may be combined to additional embodiments.
Figure 1 is a sectional view of transaxle including an automatic transmission for an automotive vehicle in accordance with an embodiment of the present description;
Figure 2 is a side explanatory diagram of the transaxle of the embodiment;
Figure 3 is a sectional view of the automatic transmission of the embodiment;
Figure 4 is a skeleton diagram schematically showing rotational elements and frictional elements of the automatic transmission of the embodiment;
Figure 5 is a table showing engaged frictional elements at respective speed gears;
Figure 6 is an enlarged sectional view of an automatic transmission in accordance with another embodiment of the present description, showing a neighborhood of an output gear.

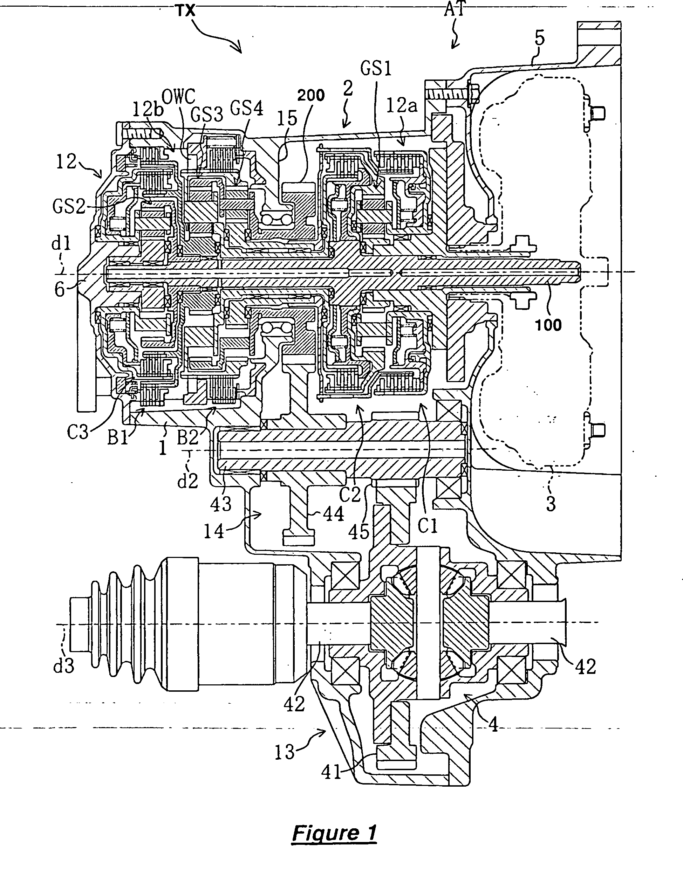

An embodiment of the present description will now be described with reference to the drawings, starting with Figure 1, which shows an overall construction of a transaxle TX for an automotive vehicle. The transaxle TX is to be coupled to an engine not shown, and preferably is mounted substantially laterally together with the engine on the vehicle. The transaxle TX basically comprises an automatic transmission AT, and a differential gear mechanism 4. Then, the transaxle TX is coupled to front wheels through drive shafts 42, and transmits torque from the engine to the front wheels.

- The automatic transmission AT comprises a shifting gear mechanism 2, and a torque converter 3. The torque converter 3 is coupled to a crank shaft of the engine, as is known in the art. The torque converter 3 receives torque from the engine, converts or multiplies it, and transmits it to an input shaft 100 of the shifting gear mechanism 2. The shifting gear mechanism 2 selectively takes one of speed ratios between the input shaft 100 and an output gear 200. The output gear 200 is rotationally arranged coaxially with the input shaft 100.

The output gear 200 engages with a driven gear 44 arranged coaxially on a counter shaft 43, which is arranged in parallel to the input shaft 100. The driven gear 44 is coupled to the counter shaft 43 preferably through a spline or other coupling known in the art, and rotates together or integrally with the counter shaft 43. Torque is transmitted from the output gear 200 to the counter shaft 43 through the driven gear 44 while the speed is reduced. A final gear 45 is also arranged coaxially on and coupled to the counter shaft 43, and rotates together with it. The final gear engages with a ring gear 41 of the differential gear mechanism 4, and also transmits the torque while reducing the speed. The differential gear mechanism 44 transmits the torque from the ring gear 41 to the right and left drive shafts 42 in the well known manner.

The torque converter 3 is at least partly housed within a torque converter housing 5. The shifting gear mechanism 2, the differential gear mechanism 4 and the counter shaft 43 are at least partly housed within a transmission case 1. The transmission case 1 has, in general, a shifting gear chamber 12 that at least partly houses the shifting gear mechanism 2, a differential gear mechanism chamber 13 that at least partly houses the differential gear mechanism 4, and a counter shaft chamber 14 that at least partly houses the counter shaft arranged substantially between the shifting gear chamber 12 and the differential gear mechanism chamber 13. A front opening of the shifting gear chamber 12 is at least partly covered by the torque converter housing 5, and a rear opening is at least partly covered by a rear cover 6.

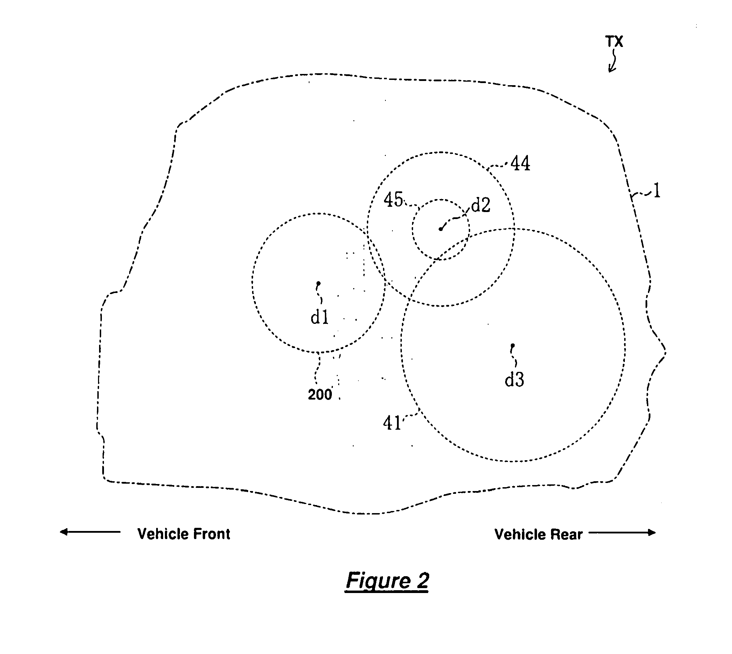

A positional relationship between the three shafts, the input shaft 100, the counter shaft 43 and the drive shafts 42, will now be described with reference to Figure 2, which shows axis centers d1, d2 and d3 of the input shaft 100, the counter shaft 43 and the drive shafts 42. Also Figure 2 shows, by broken lines, the output shaft 200 that is coaxial with the input shaft 100, the driven gear 44 and final gear 45 that are coaxial with the counter shaft 43, and the ring gear 41 that is coaxial with the drive shafts 42.

The three axes d1, d2 and d3 are arranged substantially horizontally in the order of the input shaft 200, the counter axis 43 and the drive shaft 42. The axis d2 of the counter shaft 43 preferably is positioned highest among the three axes, and the axis d3 of the drive shaft 42 preferably is lowest. However, the relative, positional relationship between the input shaft 200, the counter shaft 43 and the drive shaft 42 may vary in dependence on a geometric relationship of gears forming at least part of the shifting gear mechanism 2, gears forming at least part of the differential gear mechanism 4, the driven gear 44 and the final gear 45, packaging requirement for the transaxle in an engine room of the automotive vehicle, or the like.

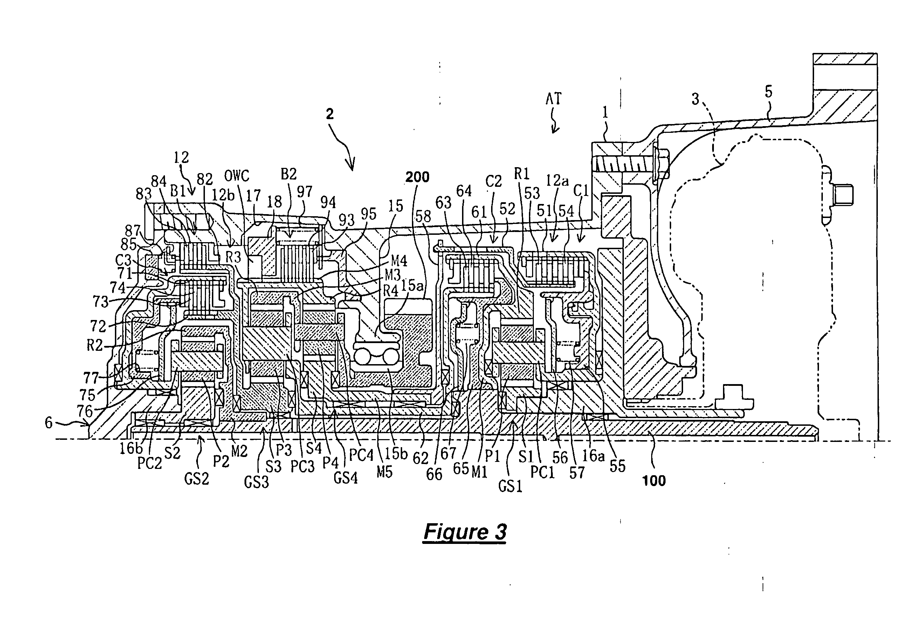

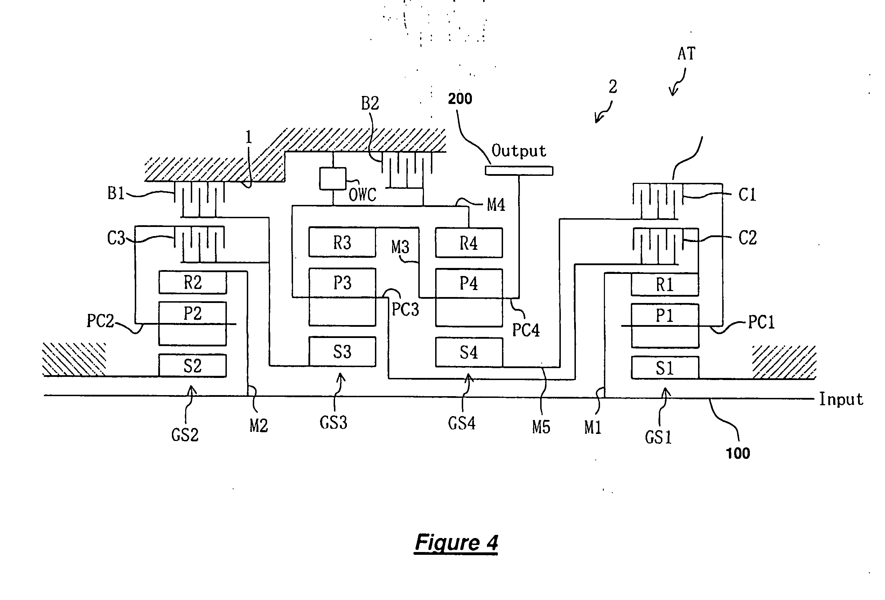

The shifting gear mechanism 2 will now be described with reference to Figures 1, 3 and 4. Figure 3 shows a detailed sectional view of the shifting gear mechanism 2 in the automatic transmission AT and Figure 4 schematically shows rotational elements and frictional elements of the shifting gear mechanism 2.

As shown in Figure 4, the shifting gear mechanism 2 comprises first through fourth planetary gear sets GS1, GS2, GS3 and GS4, first through third wet multi-plate clutches C1, C2 and C3, and first and second wet multi-plate brakes B1 and B2, all of which preferably are coaxial with the input shaft 100. The first and second planetary gear sets GS1 and GS2 preferably are respectively smaller in outer diameter than the third and fourth planetary gear sets GS3 and GS4, because the planetary gear sets GS1 and GS2 may reduce speed of the input shaft 100 directly and have less torque loads than the other two, as described in greater detail below.

As shown in Figure 1, the transmission case 1 rotationally supports the input shaft 100 by using first and second bosses 16a and 16b at or near the both axial ends of the shifting gear chamber 12 of the transmission case 1, through bearings and other member if any. Also generally in an intermediate position (preferably substantially in the middle) of the shifting gear chamber 12 in the axial direction, a support wall 15 is formed integrally or unitarily with the transmission case 1, and substantially extends inwardly in the radial direction, supporting the input shaft 100 through a bearing and rotational members. The support wall 15 divides the shifting gear chamber 12 into a front chamber 12a and a rear chamber 12b: The front chamber 12a is at a side closer to the torque converter 3 (hereinafter referred to as a front side), and a rear chamber 12b is at a side substantially opposite to the front side (hereinafter referred to as a rear side). The first boss 16a is integrally or unitarily formed with the transmission case 1 and extends substantially toward the rear side, while the second boss 16b is integrally or unitarily formed with the rear cover 6 and extends substantially toward the front side.

Only the first planetary gear set GS1 is arranged in the front chamber 12a, while the second through fourth planetary gear sets GS2, GS3 and GS4 are arranged in the rear chamber 12b. Among the three planetary gears in the rear chamber 12b, the second planetary gear set GS2 is arranged at the end of the rear side, and the fourth planetary gear set GS4 is arranged at the end of the front side.

Referring to Figures 3 and 4, the first planetary gear set GS1 comprises a first sun gear S1, a first ring gear R1, and a first carrier PC1 that supports first pinions P1 engaging with both the gears S1 and R1. In other words, the first planetary gear set GS1 preferably comprises a single set of sun gear, ring gear and pinions engaging the both, and is called a single pinion type. Also, the second planetary gear set GS2 preferably is a single pinion type planetary gear set comprising a second sun gear S2, a second ring gear R2, and a second carrier that supports second pinions engaging with both the gears S2 and R2. Speed reduction ratios at the first and second planetary gear sets GS1 and GS2 (in other words, respective ratio of numbers of teeth between the ring gears and the pinions) preferably are different from each other.

As shown in Figure 3, the first sun gear S1 is permanently fixed to an outer peripheral surface of the first boss 16a preferably by means of a spline or in the manner known in the art. Similarly, the second sun gear S2 is fixed to an inner peripheral surface of the second boss 16b preferably by means of a spline or in the manner known in the art. On the other hand, the first ring gear R1 is permanently connected to the input shaft 100 through a first connecting member M1, which has a boss fixed to the input shaft 100 in the known manner such as by welding. Similarly, the second ring gear R2 is permanently connected to the input shaft 100 through a second connecting member M2, which has a boss fixed to the -input shaft 100 in the known manner such as by spline.

Therefore, the ring gears R1 and R2 permanently rotate together or integrally with the input shaft 100, while the sun gears S1 and S2 never rotate. Thereby, the first and second planetary gear sets GS1 and GS2 permanently reduce rotational speeds of the input shaft 100, and output the reduced speeds respectively from the first and second carriers PC1 and PC2.

The third planetary gear set GS3 preferably is a single pinion type planetary gear set comprising a third sun gear S3, a third ring gear R3, and a third carrier PC3 that supports third pinions P3 engaging with both the gears S3 and R3. Also, the fourth planetary gear set GS4 is a single pinion type planetary gear set comprising a fourth sung gear S4, a fourth ring gear R4, and a fourth carrier PC4 that supports fourth pinions R4 engaging with both the gears S4 and R4.

Then, the third ring gear R3 and the fourth carrier PC4 are permanently connected by a third connecting member M3 so that the third ring gear R3 and the fourth carrier PC4 may rotate together. Also, the third carrier PC3 and fourth ring gear R4 are (permanently) connected by means of a fourth connecting member M4 so that the third carrier PC3 and the fourth ring gear R4 may rotate together. The fourth connecting member M4 extends from the rear side of the third carrier PC3 outwardly, and then extends outside of the third ring gear R3 to the fourth ring gear R4 of the fourth planetary gear set PC4 which is arranged at the front side of the third planetary gear set PC3.

In other words, the third and fourth planetary gear set GS3 and GS4, by being connected with each other by means of the third and fourth connecting members M3 and M4, collectively create four rotational elements (the third sun gear S3, the third carrier PC3 and the fourth ring gear R4, the third ring gear R3 and the fourth carrier PC4, and the fourth sun gear S4), thereby constituting a so called Simpson type planetary gear set. This particular configuration may also be called a CR-CR connection type because of the two "Carrier-Ring" connections.

The output gear 200 is arranged at the front side of the support wall 15. A bearing 15b is inserted and fixed to a boss 15a formed at the inner periphery of the support wall 15. The bearing 15a rotationally supports the output gear 200. The output gear 200 is connected to the fourth carrier PC4 so that the output gear 200 and the fourth carrier PC4 may rotate together.

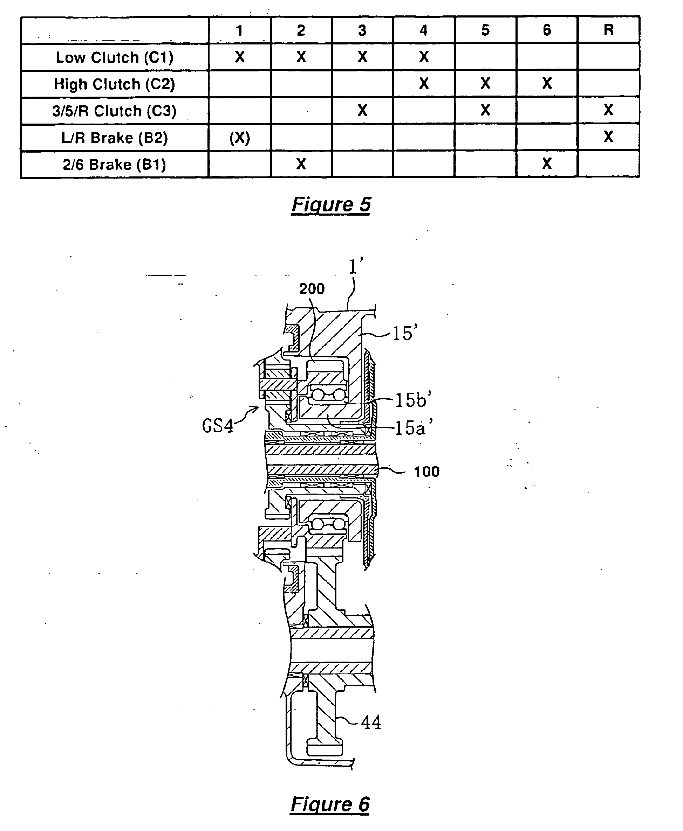

The shifting gear mechanism 2 is configured, as shown in Figure 4, to attain six forward gears and a reverse gear by selectively engaging the plurality of (preferably five) frictional elements and/or the plurality of (preferably three first through third) clutches C1 through C3 and/or the plurality of (preferably two first and second) brakes B1 and B2, as shown in Figure 5 (X indicates engagement of a frictional element). Although not shown, a hydraulic control circuit is connected to actuators for the (first through third) clutches C1 through C3 and (first and second) brakes B1 and B2, and selectively supplies a pressure to the actuators to engage the corresponding the frictional elements. The hydraulic control circuit may be a purely hydraulic controller, a electronic controller, a hydraulic and electronic controller, an electromagnetic controller, or any other appropriate controller known in the art.

Although described later in detail, in the present embodiment, a one-way clutch OWC is arranged in parallel to the second brake B2. Although normally in the first forward gear, the second brake B2 is not engaged, the second brake B2 is engaged only in a case such as a manual mode or a hold mode where engine brake is necessary (shown with a parenthesis in the engagement operational table). However, there may not be the one-way clutch OWC. In that case, the second brake B2 is engaged in the first forward gear.

The first clutch C1 engages the fourth sun gear S4 and the first carrier PC1 in the first through fourth gears as shown in the engagement operational table of Figure 5 (hereinafter, the first clutch will be referred to as Low clutch). The Low clutch C1 is arranged at the outer periphery of the first planetary gear set GS1 in the radial direction. It preferably comprises a clutch drum 51, whose boss is connected to the first carrier PC1 at its front side, a clutch hub 52 arranged at the radial inside of the clutch drum 51, and/or a plurality of frictional clutch hub plates 53 and frictional clutch drum plates 54 arranged alternately in the axial direction between the clutch drum 51 and the clutch hub 52 in the radial direction.

At radial inside of the clutch drum 51, a clutch piston 55 is arranged and defines a pressure receiving chamber with the walls of the clutch drum 51. When a hydraulic pressure is introduced into the pressure receiving chamber, the clutch piston 55 may move toward the rear side against urging or biasing force of a return spring 57, and push the fictional plates 53 and 54, which press each other and transmit torque from the clutch drum 51 to the clutch hub 52.

In the present embodiment, considering that hydraulic pressure in the pressure receiving chamber rises as it rotates due to centrifugal force, a sealing plate (balance plate) 56 is provided and defines, with the piston 55, a centrifugal balance chamber that is next to the pressure receiving chamber. Thereby, hydraulic pressures in the centrifugal balance chamber and the pressure receiving chamber may increase equally as the rotational speed increases, so that the clutch controllability can be improved.

The clutch hub 52 extends in the axial direction to the rear side at the outer periphery of a clutch drum 61 of later described High clutch C2. The rear end of the clutch hub 52 couples to a disk shaped torque transmitting member 58, which has a cylindrical boss at its inner periphery that is coupled to a fifth connecting member M5 by a spline or the like. The fifth connecting member M5 axially extends between the input shaft 100 and the output gear 200 as seen in the radial direction, and connects to the sun gear S4 of the planetary gear set GS4. Therefore, the clutch hub 52 eventually couples to the fourth sun gear S4 through the torque transmitting member 58 and the fifth connecting member M5. So, when the Low clutch C1 is engaged, the first carrier PC1 of the first planetary gear set GS1 and the fourth sun gear S4 of the fourth planetary gear set GS4 rotate together.

The second clutch C2 engages the third carrier PC3 and the first ring gear R1 (in other words, the input shaft 100), as shown in the engagement operational table of Figure 5, in the fourth through sixth gears (hereinafter, the second clutch will be referred to as a High clutch). The High clutch C2 is arranged at the outer periphery of the first planetary gear set GS1 in the radial direction and at the rear side of the Low clutch C1 in the axial direction. The High clutch C2 comprises a clutch drum 61, whose boss is connected to the first ring gear R1 at its rear side, a clutch hub 62 arranged at the radial inside of the clutch drum 61, a plurality of frictional clutch hub plates 63 and/or frictional clutch drum plates 64 arranged alternately in the axial direction between the clutch drum 61 and the clutch hub 62 in the radial direction.

The clutch hub 62 has a cylindrical boss at its radial inner periphery, which axially extends to the rear side between the input shaft 100 and the output gear 200 in the radial direction, and eventually connects to the third carrier PC3. Accordingly, when the above High clutch C2 is engaged, the first ring gear R1 of the third carrier PC3 of the third planetary gear set GS3 will rotate together.

The High clutch C2 has, at its radial inside, a clutch piston 65, which defines a pressure receiving chamber with walls of the first connecting member M1 that connects the first ring gear R1 to the input shaft 100. The clutch piston 65 may move, depending on operational hydraulic pressure supplied to the pressure receiving chamber, against urging or biasing force of a return spring 67, toward the rear side (in the left direction in Figure 3), press the clutch plates 63 and 64 to each other, and engage together the clutch drum 61 and the clutch hub 62. Considering the centrifugal force applied on the operational oil in this pressure receiving chamber as well, a sealing plate 66 is arranged to define a centrifugal balance chamber next to the pressure receiving chamber.

As described above, the two clutches C1 and C2 are housed in the front chamber 12a of the shifting gear chamber 12 of the transmission case 1. The Low clutch C1 which selectively transmits torque from the input shaft 100 to the sun gear S4 of the fourth planetary gear set is arranged at the front side of the High clutch C2 which selectively transmits torque from the input shaft 100 to the planetary carrier PC3 of the third planetary gear set GS3 and the sun gear S4 of the fourth planetary gear set PC4. The Low clutch C1 and the High clutch C2 are arranged substantially aligned in the input shaft direction, and the clutch piston 55 of the Low clutch C1 and the clutch piston 65 of the High clutch C2 are respectively arranged at the front and rear sides of the first planetary gear set GS1 in the axial direction. Therefore, these rotational parts are housed in the front chamber 12a with higher space efficiency, and the members connecting between these rotational parts can be can be made shorter.

On the other hand, in the rear chamber 12b of the shifting gear chamber 12 of the transmission case 1, three frictional elements, i.e. the first clutch C3 and the first and second brakes B1 and B2, are housed.

The third clutch C3 may engage the second carrier PC2 and the third sun gear S3, as shown in the engagement operational table of Figure 5, in the third gear, the fifth gear and the reverse gear (hereinafter, the third clutch will be called a 3/5/R clutch). The 3/5/R clutch C3 has a clutch drum 71 which is arranged at the outer periphery of the second planetary gear set GS2, has a boss connected to the second carrier PC2, a clutch hub 72 which is arranged at the inner peripheral side of the clutch drum 71 in the radial direction and has a boss connected to the third sun gear S3, and/or a plurality of frictional clutch hub plates 73 and frictional clutch drum plates 74 arranged alternately in the axial direction between the clutch drum 51 and the clutch hub 52 in the radial direction. Accordingly, when the 3/5/R clutch is engaged, the second carrier PC2 of the second planetary gear set GS2 and the third sun gear S3 of the third planetary gear set GS3 will rotate together.

The 3/5/R clutch C3 has, at its radial inside, a clutch piston 75, which defines a pressure receiving chamber with walls of the clutch drum 71. The clutch piston 75 may move, depending on operational hydraulic pressure supplied to the pressure receiving chamber, against urging force of a return spring 77, toward the front side (in the left direction in Figure 3), press the clutch plates 73 and 74 to each other, and engage together the clutch drum 71 and the clutch hub 72. Considering the centrifugal force applied on the operational oil in this pressure receiving chamber as well, a sealing plate 76 is arranged to define a centrifugal balance chamber with the clutch piston 75.

The first brake B1 engages the third sun gear S3 to the transmission case 1, and stops the rotation of the third sun gear S3, as shown in the engagement operational table of Figure 5, in the second and sixth gears (hereinafter, the first brake will be referred to as a 2/6 brake). The 2/6 brake B1 has a brake hub 82 that is arranged at between the 3/5/R clutch C3 and the transmission case 1 in the radial direction, and has a boss connected to the clutch hub 72 of the 3/5/R clutch C3, and a plurality of frictional brake hub plates 83 and frictional brake case plates 84 arranged alternately in the axial direction between the inner surface of the transmission case and the brake hub 82 in the radial direction. Since the brake hub 82 connects to the clutch hub 72 of the 3/5/R clutch C3, the brake hub 82 eventually connects to the third sun gear S3. Accordingly, the 2/6 brake B1 is engaged, the sun gear S3 of the third planetary gear set GS3 does not rotate.

A brake piston 85 is at least partly inserted into a concave or recess formed in the rear cover 6 of the transmission case 1, and defines a pressure receiving chamber with that concave or recess. The brake piston 85 may move, depending on a hydraulic pressure supplied to the pressure receiving chamber, against urging force of a return spring 87, toward the front side (in the right direction in Figure 3), press the brake plates 83 and 84 to each other, and engage together the brake hub 82 and the transmission case 1.

The brake piston 85 of the 2/6 brake B1 is arranged at the outer side of the clutch piston 75 of the 3/5/R clutch C3 in the radial direction, and the both pistons 75 and 85 are overlapped with each other in the axial direction. Therefore, the both pistons 75 and 85 can be arranged closer to the torque converter 3 in the axial direction, and the overall length of the automatic transmission AT can be made shorter.

The second brake B2 engages the fourth connecting member M4, which connects the third carrier PC3 and the fourth ring gear R4, to the transmission case 1, and selectively stops the rotation of the fourth connecting member M4 and the fourth ring gear R4, as shown in the engagement operational table of Figure 5, in the first and reverse gears (hereafter, the second brake B2 will be called a L/R brake). As described above, the L/R brake B2 is engaged in the first gear only when engine brake is needed, such as in a manual mode, a hold mode, or the like.

The L/R brake B2 is arranged at the front side of the 2/6 brake B1, and an outer side of the third and fourth planetary gear sets GS3 and GS4. The fourth connecting member M4 constitutes a brake hub of the L/R brake B2. A plurality of frictional brake hub plates 93 and frictional brake case plates 94 are arranged alternately in the axial direction and between the fourth connecting member M4 and the transmission case in the radial direction. Accordingly, when the L/R brake B2 is engaged, the third carrier PC3 of the third planetary gear set GS3 and the ring gear R4 of the fourth planetary gear set GS4 do not rotate.

A brake piston 95 is at least partly inserted into a concave or recess formed in the support wall15 at its rear side to define a pressure receiving chamber. The brake piston 95 may move, depending on a hydraulic pressure supplied to the pressure receiving chamber, against urging or biasing force of a return spring 97, toward, the rear side- (left side of Figure 3), press the brake plates 93 and 94 to each other, and engage together the fourth connecting member M4 and the transmission case 1.

The return spring 97 is arranged in a concave groove 17 formed at the inner surface of the transmission case 1, and thereby the return spring 97 is positioned at an outer radial side of the brake plates 93 and 94.

At the rear side of the L/R brake B2, a one-way clutch OWC preferably is arranged between the transmission case 1 and the fourth connecting member M4. The one-way clutch OWC prevents the fourth connecting member M4 from rotating in one direction.

The one way clutch OWC preferably is supported by a support member 18 that is attached and fixed to the inner surface of the transmission case 1. The support member 18 also functions as a receiver for the spring force of the return spring 97 of the UR brake B2, and as a retainer plate to for receiving the pressing force of the brake plates 93 and 94 caused by the brake piston 95.

The automatic transmission AT of the present embodiment has the first through fourth planetary gear sets GS1 through GS4 preferably of the single pinion type, and configured to control or selectively activate the three first through third clutches C1 through C3 and two first and second brakes B1 and B2 to attain six forward gears and a reverse gear. In other words, the automatic transmission AT preferably does not include a compound type planetary gear set such as the Ravigneaux type, preferably does not need a planetary gear set of the double sun gear type or double ring gear type, and further needs only small number, actually five or less, of frictional elements that engage rotational elements with each other, for which, it is advantageous in reduction of cost and weight, reduction of noise or vibration.

As described above, the first and second planetary gear sets GS1 and GS2 permanently reduce the speed of the input shaft 100, and torque from the input shaft preferably is permanently input to the planetary gear sets GS1 and GS2 through no releasable frictional elements and multiplied there. Therefore, torque load there is a minimum because the planetary gear sets GS1 and GS2 perform a first stage of multiple torque multiplication stages, and torque fluctuation there is a minimum because of the permanent torque transmission. Consequently, the first and second planetary gear set can have a smaller size. Thereby, the Low and High clutches C1 and C2 can be arranged at the outer side of and partly overlapped with the first planetary gear set GS1 in the axial direction, and the 3/5/R clutch C3. and the 2/6 brake B1 can be arranged at the outer side of and overlapped with the second planetary gear set GS2.

Further, by preferably arranging the first planetary gear set GS1 at or near the front side, the second permanent reduction gear set GS2 at the rear side, the Simpson type planetary gear set consisting of the relatively larger two sets of third and fourth planetary gear sets GS3 and GS4 between the first and second planetary gear sets GS1 and GS2, and the output gear 200 that is connected to the fourth carrier PC4 between the Simpson type planetary gear set and the first planetary gear set GS1, the connecting members and the like M1 through M5, 51, 52, 58, 61, 62, 71, 72 and 82 can be made shorter, and the automatic transmission AT can be made smaller.

Also, by arranging the Low and High clutches C1 and C2 at the outer side of the first planetary gear set GS1, the overall length of the transmission can be made shorter to construct it compact, as well as to make it further appropriate for mounting on front wheel drive vehicles.

At this time, since the first planetary gear set GS1 is made compact, the automatic transmission AT is prevented from being larger in the radial direction even when the clutches C1 and C2 are arranged at the outer side of the first planetary gear set GS1.

The 2/6 brake B1 and the L/R brake B2, which are relatively large in diameter especially from a viewpoint of securing brake capacity, are housed in the rear chamber 12b. Only the clutches (Low and High clutches C1 and C2), which do not need so large diameter, preferably are at least partly housed or arranged in the front chamber 12a, in which the first planetary gear set GS1 preferably is at least partly housed or arranged, and/or preferably arranged substantially side by side in the axial direction. Therefore, the final gear 45 can be arranged at least partly overlapped with the two clutches C1 and C2 in the axial direction, and eventually the differential gear mechanism 4 can be too. Consequently, the differential gear mechanism 4 can be arranged closer to the torque converter 3 or the vehicle-center line.

Further by arranging the first planetary gear set GS1 in the intermediate position (preferably substantially in the substantially middle -position) in the axial direction in the front chamber and the clutch pistons 55 and 65 of the Low and High clutches C1 and C2 in spaces of the both sides of the first planetary gear set GS1 in the axial direction, the first planetary gear set GS1 and the Low and High clutches C1 and C2 can be arranged with great space efficiency.

Additionally by preferably arranging the Low clutch C1 that is connected to the output of the first planetary gear set GS1 at its the front side, and the High clutch C2 that is connected to the input of the first planetary gear set GS1 at its rear side, the members 51, 52, 58, 61 and 62 that make input/output with the Low and High clutches C1 and C2 can be arranged in shorter length, and then in thickness, so the automatic transmission AT can be made smaller.

Since the front chamber 12a can be made smaller in the radial direction as described above, the differential gear mechanism 4 can be closer to the front chamber 12a in the vehicle longitudinal direction (see Figure 2), and the overall transaxle TX including the differential gear mechanism 4 can be smaller, and the differential gear mechanism 4 can be arranged closer to the vehicle center line (see Figure 1). This is advantageous on that the both drive shafts 42 make their folding angles to be moderate when the front wheels are steered. Also, the ring gear 41 of the differential gear mechanism 4 can be made greater in diameter, and it will be preferable on that the design freedom of speed reduction ratio is increased without decreasing compactness.

By preferably arranging 3/5/R clutch C3 and the 2/6 brake B1 at the outer side of the second planetary gear set GS2 in the radial direction and at least partly overlapped in the axial direction, these parts can be housed in smaller space in the axial and radial directions because the second planetary gear set GS2 is made smaller as described above. Therefore, the rear cover 6, the transmission case 1 or the like can be made smaller while their rigidity can be maintained.

Further, since the output gear 100 preferably is arranged at the rear side of the first planetary gear set GS1, the driven gear 44 of relatively greater diameter can be arranged offset from the first planetary gear set GS1 substantially in the vehicle width direction, and the counter shaft 43 can be arranged closer to the shifting gear mechanism 2 in the generally vertical direction (see Figure 2). In other words, the transaxle TX can be made smaller substantially in the vertical direction. And, since the length of the counter shaft 43 can be made shorter by arranging the driven gear 44 closer to the final gear 45, the transaxle TX can be made smaller in the vehicle width direction particularly without causing unnecessary mechanical loss and/or weight increase (see Figure 1).

In the above embodiment, the output gear 100 is rotationally supported preferably by means of the bearing 15b at least partly inserted into the boss 15a of the support wall 15, arranged at the front side of the support wall 15, and housed in the front chamber 12a. Therefore, the driven gear 44 can be arranged closer to the torque converter in the axial direction, and eventually the counter shaft 43 can be made shorter.

Alternatively, as shown in Figure 6, a bearing 15b' may be at least partly outfit on or arranged over the boss 15a' of the support wall 15', and the output gear 200 may be supported by means of the bearing 15b', and at least partly housed in a concave groove formed in the support wall 15' at its rear side. In this construction, the output gear 200 is not required to pass through the support wall 15' to connect to the planetary carrier PC4 of the fourth planetary gear set GS4, and the input shaft 100 can be made shorter.
It is needless to say that the invention is not limited to the illustrated embodiments and that various improvements and alternative designs are possible without departing from the substance of the invention as claimed in the attached claims. For example, the transaxle TX may be mounted on rear wheel drive vehicles.

## Claims

1. An automatic transmission comprising:
a transmission case (1);
a first shaft (100) housed in and rotationally supported by said transmission case (1), and capable of receiving torque from an engine;
a first shifting gear mechanism (GS1, GS3 and GS4) arranged coaxially with said first shaft (1);
a second shifting gear mechanism including a second planetary gear set (GS2), said second planetary gear set being housed within said transmission case (1) and arranged coaxially with said first shaft (100), one of its sun and ring gears being capable of rotating together with said input shaft, and the other of said sun and ring gears being fixed to said transmission case (1); and
first and second frictional elements (C3 and B1), and
wherein each of said first and second frictional elements (C3 and B1) is arranged at least partly overlapped with said second planetary gear set (GS2) in the axial direction and between said second planetary gear set (GS2) and said transmission case (1) in the radial direction,
wherein said first shifting gear mechanism comprises three planetary gear sets (GS1, GS3 and GS4), and each of said planetary gear sets (GS1, GS2, GS3, GS4) is a single pinion type planetary gear set;
**characterized in that**
said first frictional element is a clutch (C3), and said second frictional element is a brake (B1) arranged between said clutch (C3) and said transmission case (1) in the radial direction, and
the automatic transmission further comprising:
a torque converter (3) capable of transmitting torque from said engine to one axial end region of said first shaft (100), said first shifting gear mechanism being arranged between said torque converter and said second planetary gear set in the axial direction,
an output gear (200) arranged coaxially on said first shaft (100) between said second planetary gear set (GS2) and said torque converter (3) in the axial direction;
a second shaft (43) arranged in parallel to said first shaft (100);
a driven gear (44) coaxially arranged on said second shaft (43) and engaging with said output gear (200); and
a final gear (45) coaxially arranged on said second shaft (43) between said torque converter (3) and said driven gear (44) in the axial direction, and capable of transmitting torque from said driven gear (44) to a vehicle driving wheel.

2. The automatic transmission as described in claim 1, wherein said first and second frictional elements (C3, B1) are connected to a single rotational element (S3) of said first shifting gear mechanism.

3. The automatic transmission as described in claim 1 or 2, further comprising a third frictional element (B2) arranged overlapped with a planetary gear set (GS3) consisting of a part of said first shifting gear mechanism and is arranged next to said second planetary gear set (GS2) in the axial direction.

4. The automatic transmission as described in any one of the preceding claims, wherein said ring gear (R2) of said second planetary gear set (GS2) is connected to said first shaft (100) at a first side of said second planetary gear set that faces to said torque converter (3).

5. The automatic transmission as described in claim 4, wherein a planetary carrier (PC2) of said second planetary gear set (GS2) is connected to said first frictional element (C3) at a second side of said second planetary gear set that is opposite to said torque converter (3).

6. The automatic transmission as described claim 4 or 5, wherein said first frictional element (C3) is connected to one (R3) of rotational elements of said first shifting gear mechanism at said first side of said second planetary gear set.

7. The automatic transmission as described any one of claims 4 through 6, further comprising a hydraulic piston (75, 85) capable of axially moving and selectively engaging said first or second frictional element (C3, B1), said hydraulic piston being arranged at a second side of said second planetary gear set (GS2) that is opposite to said torque converter (3).

## Patentansprüche

1. Ein automatisches Getriebe, das Folgendes umfasst:
ein Getriebegehäuse (1);
eine erste Welle (100), die im genannten Getriebegehäuse (1) aufgenommen und durch dieses drehbar gelagert ist, und die dazu in der Lage ist, ein Drehmoment von einem Motor aufzunehmen;
ein erstes Umsetzungsgetriebe (*gear shifting mechanism*) (GS1, GS3 und GS4), das zur genannten ersten Welle (1) koaxial angeordnet ist;
ein zweites Umsetzungsgetriebe, das einen zweiten Planetenradsatz (GS2) umfasst, wobei der genannte zweite Planetenradsatz innerhalb des genannten Getriebegehäuse (1) aufgenommen ist und zur genannten ersten Welle (100) koaxial angeordnet ist, wobei eines seiner Sonnen- und Hohlräder dazu in der Lage ist, mit der genannten Eingangswelle zusammen zu drehen und wobei das andere seiner Sonnen- und Hohlräder am genannten Getriebegehäuse (1) befestigt ist; und
ein erstes und zweites Reibungselement (C3 und B1), und
wobei jedes der genannten ersten und zweiten Reibungselemente (C3 und B1) zumindest teilweise mit dem genannten zweiten Planetenradsatz (GS2) in axialer Richtung und zwischen dem genannten zweiten Planetenradsatz (GS2) und dem genannten Getriebegehäuse (1) in radialer Richtung überlappend angeordnet ist,
wobei das genannte erste Umsetzungsgetriebe drei Planetenradsätze (GS1, GS3 und GS4), und jeder der genannten Planetenradsätze (GS1, GS2, GS3, GS4) ein Planetenradsatz des Typs Einzelritzel ist;
**dadurch gekennzeichnet, dass**
das genannte erste Reibungselement eine Kupplung (C3) ist und das genannte zweite Reibungselement eine Bremse (B1) ist, die in radialer Richtung zwischen der genannten Kupplung (C3) und dem genannten Getriebekasten (1) angeordnet ist, und
wobei das automatische Getriebe des Weiteren Folgendes umfasst:
einen Drehmomentwandler (3), der in der Lage ist, ein Drehmoment vom genannten Motor zu einem axialen Endbereich der genannten ersten Welle (100) zu übertragen, wobei das genannte erste Umsetzungsgetriebe in axialer Richtung zwischen dem genannten Drehmomentwandler und dem genannten zweiten Planetenradsatz angeordnet ist,
ein Abtriebsrad (200), das koaxial auf der genannten ersten Welle (100) in axialer Richtung zwischen dem genannten zweiten Planetenradsatz (GS2) und dem genannten Drehmomentwandler (3) angeordnet ist;
eine zweite Welle (43), die parallel zur ersten Welle (100) angeordnet ist;
ein angetriebenes Getriebe (44), das koaxial auf der genannten zweiten Welle (43) angeordnet ist und das mit dem genannten Abtriebsrad (200) in Eingriff kommt; und
ein abschließendes Getriebe (45), das koaxial auf der genannten zweiten Welle (43) in axialer Richtung zwischen dem genannten Drehmomentwandler (3) und dem genannten angetriebenes Getriebe (44) angeordnet ist, und dazu in der Lage ist ein Drehmoment vom genannten angetriebenen Getriebe (44) zu einem Antriebsrad eines Fahrzeugs zu übertragen.

2. Das automatische Getriebe nach Anspruch 1, wobei die genannten ersten und zweiten Reibungselemente (C3, B1) mit einem einzelnen Drehelement (S3) des genannten ersten Umsetzungsgetriebe verbunden sind.

3. Das automatische Getriebe nach Anspruch 1 oder 2, das des Weiteren ein drittes Reibungselement (B2) umfasst, das mit einem Planetenradsatz (GS3) überlappend angeordnet ist, der aus einem Teil des genannten ersten Umsetzungsgetriebe besteht, und in axialer Richtung in der Nähe des genannten zweiten Planetenradsatzes (GS2) angeordnet ist.

4. Das automatische Getriebe nach einem der vorhergehenden Ansprüche, wobei das genannte Hohlrad (R2) des genannten zweiten Planetenradsatzes (GS2) mit der genannten ersten Welle (100) an einer ersten Seite des genannten zweiten Planetenradsatzes verbunden ist, die zum Drehmomentwandler (3) hin gewandt ist.

5. Das automatische Getriebe nach Anspruch 4, wobei ein Planetenträger (PC2) des genannten zweiten Planetenradsatzes (GS2) mit dem genannten ersten Reibungselement (C3) an einer zweiten Seite des genannten zweiten Planetenradsatzes verbunden ist, die dem genannten Drehmomentwandler (3) entgegengesetzt ist.

6. Das automatische Getriebe nach Anspruch 4 oder 5, wobei das genannte erste Reibungselement (C3) mit einem (R3) unter den Drehelementen des genannten ersten Umsetzungsgetriebes an der genannten ersten Seite des genannten zweiten Planetenradsatzes verbunden ist.

7. Das automatische Getriebe nach einem der Ansprüche von 4 bis 6, das des Weiteren einen hydraulischen Kolben (75, 85) umfasst, der in der Lage ist, das genannte erste oder zweite Reibungselement (C3, B1) axial zu bewegen und selektiv in Eingriff zu bringen, wobei der genannte hydraulischen Kolben an einer zweiten Seite des genannten zweiten Planetenradsatzes (GS2) angeordnet ist, die dem genannten Drehmomentwandler (3) entgegengesetzt ist.

## Revendications

1. Une boîte de vitesses automatique ou encore une transmission automatique, comprenant :
un carter de boîte de vitesses (1) ;
un premier arbre (100) logé dans et soutenu de manière rotative par le dit carter de boîte de vitesses (1), et capable de recevoir un couple d'un moteur ;
un premier mécanisme d'engrenage commutable (*shifting gear mechanism*) (GS1, GS3 et GS4) disposé de façon coaxiale avec le dit premier arbre (1) ;
un deuxième mécanisme d'engrenage commutable comprenant un deuxième train planétaire (GS2), le dit deuxième train planétaire étang logé à l'intérieur du dit carter de boîte de vitesses (1) et disposé de façon coaxiale avec le dit premier arbre (100), un de ses planétaires et de ses couronnes étant capable de tourner ensemble avec l'arbre d'entrée nommée et l'autre de ses planétaires et de ses couronnes nommés étant fixé au dit carter de boîte de vitesses (1) ; et
des éléments de frottement premier et deuxième (C3 et B1), et
sachant que chacun des dits éléments de frottement premier et deuxième (C3 et B1) est disposé de manière qu'au moins une partie chevauche en direction axiale avec le dit deuxième train planétaire (GS2) et en direction radiale entre le dit deuxième train planétaire (GS2) et le dit carter de boîte de vitesses (1),
sachant que le dit premier mécanisme d'engrenage commutable comprend trois trains planétaires (GS1, GS3 et GS4), et que chacun des dits trains planétaires (GS1, GS2, GS3, GS4) est un train planétaire à pignon unique ;
**caractérisée en ce que**
le dit premier élément à frottement est un embrayage (C3), et que le dit deuxième élément à frottement est un frein (B1) disposé en direction radiale entre le dit embrayage (C3) et le dit carter de boîte de vitesses (1), et
la boîte de vitesses automatique comprenant en outre :
un convertisseur de couple (3) capable de transmettre un couple du dit moteur à un domaine terminal axial du dit premier arbre (100), le dit premier mécanisme d'engrenage commutable étant disposé en direction axiale entre le dit convertisseur de couple et le dit deuxième train planétaire,
un engrenage de sortie (200) disposé de manière coaxiale sur le dit premier arbre (100) entre le dit deuxième train planétaire (GS2) et le dit convertisseur de couple (3) en direction axiale ;
un deuxième arbre (43) disposé parallèlement au dit premier arbre (100) ;
un engrenage mené (44) disposé de manière coaxiale sur le dit deuxième arbre (43) et s'engageant avec le dit engrenage de sortie (200) ; et
un engrenage terminal (45) disposé de manière coaxiale sur le dit deuxième arbre (43) entre le dit convertisseur de couple (3) et le dit engrenage mené (44) en direction axiale et capable de transmettre un couple du dit engrenage mené (44) à une roue motrice de véhicule.

2. La boîte de vitesses automatique d'après la revendication 1, sachant que le premier et le deuxième élément à frottement (C3, B1) sont raccordés à un seul élément rotatif (S3) du dit premier mécanisme d'engrenage commutable.

3. La boîte de vitesses automatique d'après la revendication 1 ou 2, comprenant en outre un troisième élément à frottement (B2) disposé de manière à être chevauché par un train planétaire (GS3) consistant d'une partie du dit premier mécanisme d'engrenage commutable et disposé en direction axiale à proximité du dit deuxième train planétaire (GS2).

4. La boîte de vitesses automatique d'après une des revendications précédentes, sachant que la dite couronne (R2) du dit deuxième train planétaire (GS2) est raccordée au dit premier arbre (100) d'un premier côté du dit deuxième train planétaire faisant face au dit convertisseur de couple (3).

5. La boîte de vitesses automatique d'après la revendication 4, sachant qu'un porte-satellites (PC2) du dit deuxième train planétaire (GS2) est raccordé au dit premier élément à frottement (C3) d'un deuxième côté du dit deuxième train planétaire opposé au dit convertisseur de couple (3).

6. La boîte de vitesses automatique d'après la revendication 4 ou 5, sachant que le dit premier élément à frottement (C3) est raccordé à un (R3) des éléments rotatifs du dit premier mécanisme d'engrenage commutable du dit premier côté du dit deuxième train planétaire.

7. La boîte de vitesses automatique d'après une des revendications de 4 à 6, comprenant en outre un piston hydraulique (75, 85) capable de déplacer axialement et sélectivement de faire engager le dit premier ou deuxième élément à frottement (C3, B1), le dit piston hydraulique étant disposé à un deuxième côté du dit deuxième train planétaire (GS2) opposé au dit convertisseur de couple (3).
